# EUROPÄISCHE PATENTSCHRIFT

(11) **EP 2 439 117 B1**
(45) Veröffentlichungstag und Bekanntmachung des Hinweises auf die Patenterteilung: **13.09.2017**
(21) Anmeldenummer: 11183757.1
(22) Anmeldetag: 04.10.2011
(51) Int. Cl.: B60T 17/22, F16D 66/02

(54) **Verfahren zum Ermitteln von Unregelmäßigkeiten an einer Radbremse eines Fahrzeugs und eine entsprechende Vorrichtung**
Method and device for detecting irregularities in a wheel brake of a vehicle
Procédé de détermination d'irrégularités sur un frein de roue d'un véhicule et dispositif correspondant

(30) Priorität: 06.10.2010 DE 102010047705
(43) Veröffentlichungstag der Anmeldung: 11.04.2012
(73) Patentinhaber: KNORR-BREMSE Systeme für Nutzfahrzeuge GmbH, 80809 München (DE)
(72) Erfinder: Pahle, Wolfgang, 83707 Bad Wiessee (DE)
(74) Vertreter: Mattusch, Gundula

(56) Entgegenhaltungen:
- DE-A1- 3 300 446
- DE-A1- 10 127 480
- DE-A1- 10 211 813
- DE-C1- 19 625 400

## Beschreibung

Die Erfindung betrifft ein Verfahren zum Ermitteln von Unregelmäßigkeiten an einer Radbremse eines Fahrzeugs nach dem Oberbegriff des Anspruchs 1. Die Erfindung bezieht sich auch auf eine Vorrichtung zur Durchführung eines solchen Verfahrens. Ein Verfahren und eine Vorrichtung dieser Gattung ist aus dem Dokument DE 3300446 A1 bekannt.

Radbremsen für Fahrzeuge sind in unterschiedlicher Bauweise bekannt und oftmals mit einem oder mehreren Sensoren zur Erfassung eines Verschleißes der Bremsbeläge und Bremsscheiben ausgerüstet. So ist zum Beispiel bei einer Radbremse in jedem Bremsbelag oder in einer Nachstelleinrichtung ein Verschleißsensor angeordnet, welcher kontinuierlich einen Summenverschleiß von Bremsbelägen und Bremsscheibe (bei einer Scheibenbremse) erfasst. Ein derartiger Verschleißsensor erzeugt in unterschiedlicher Bauart ein Signal, welches einen Verschleißwert beinhaltet, der in einem Bremssteuergerät (EBS) einerseits zur Fahrerinformation über den momentanen Verschleißzustand, andererseits zu einer Verschleißharmonisierung zwischen Achsen eines Fahrzeugs (z.B. Vorder- und Hinterachse) durch entsprechende Bremskraftverteilung im Fahrzeug genutzt wird. Der Verschleißwert bzw. das diesen Verschleißwert aufweisende Signal gibt eine Information darüber, wie weit zum Beispiel Druckstücke einer Radbremse durch eine Nachstelleinrichtung in Bezug auf eine Ausgangsposition verstellt bzw. verdreht worden sind.

Der Verschleißsensor kann schon mit einer integrierten Elektronik zur Messsignalaufbereitung versehen sein und ein analoges oder digitales Signal ausgeben. Die Verschleißsensoren einer Bremsanlage eines Fahrzeugs können an einen fahrzeuginternen Bus angeschlossen sein und erzeugen eine Information über ihren Einbauort (Achse, Rad, Seite, Bremsbelag u.a.), welche dem ausgegebenen Signal beigefügt wird, um eine eindeutige Zuordnung von Verschleißwert zu der zugehörigen Radbremse zu erhalten.

In einer Radbremse können unerwünschte Betriebszustände durch eine Vielzahl unterschiedlicher Einflussfaktoren, wie beispielsweise Temperaturen, Vibrationen, Betriebs- und Fahrbetriebsbedingungen, sowie in Kombination mit Einflüssen in der Bremsmechanik, z.B. Überlagerung extremer Fertigungstoleranzen, entstehen. Die Folge kann z.B. ein deutlicher Mehr-/Ungleichverschleiß der Bremsbeläge einer Radbremse oder ein so genannter Heißläufer sein.

Derzeit werden alle Bauteile entsprechend robust und weit über normale Beanspruchungen hinaus gehend ausgelegt. Dennoch lassen sich nicht alle Einsatzbedingungen im Vorfeld abprüfen.

Es ist daher die Aufgabe der vorliegenden Erfindung, ein Verfahren zum Ermitteln von Unregelmäßigkeiten an einer Radbremse eines Fahrzeugs bereitzustellen.

Eine weitere Aufgabe besteht darin, eine Erkennungsvorrichtung zur Durchführung eines solchen Verfahrens zu schaffen.

Die Aufgabe wird durch ein Verfahren mit den Merkmalen des Anspruchs 1 und durch eine Vorrichtung mit den Merkmalen des Anspruchs 9 gelöst.

Eine Idee der Erfindung besteht darin, die von Verschleißsensoren erfassten Verschleißwerte zu speichern und zu untersuchen, um Unregelmäßigkeiten zu erkennen.

Demgemäß weist ein Verfahren zum Erkennen von Unregelmäßigkeiten einer Bremsanlage eines Fahrzeugs mit einem Bremssteuergerät und Radbremsen mit jeweiligen Verschleißsensoren, folgende Verfahrensschritte auf:
S1 Ermitteln von Verschleißwerten der Radbremsen durch die jeweiligen Verschleißsensoren und Speichern der Verschleißwerte;
S2 Untersuchen der gespeicherten Verschleißwerte;
S3 Vergleichen von Ergebnissen des Untersuchens der gespeicherten Verschleißwerte mit vorbestimmbaren Normalwerten und/oder Grenzwerten; und
S4 Erkennen von Unregelmäßigkeiten anhand des Vergleichens, Überprüfen der Unregelmäßigkeiten und Ausgeben von entsprechenden Informationen.
So können Unregelmäßigkeiten schon früh in der Entstehungsphase erkannt werden und können durch entsprechende Maßnahmen (Wartung, Reparatur) entsprechend schnell behoben werden. Eine zusätzliche Sensierung der Radbremsen ist nicht notwendig, da diese schon durch die vorhandenen Verschleißsensoren gegeben ist.

Den ermittelten Verschleißwerten wird vor dem Speichern eine Zeitinformation zugefügt. Dadurch wird ein Bezug zum zeitlichen Ablauf von Bremssituationen und Fahrbetriebszuständen hergestellt, der anhand der Zeitinformation zurückverfolgbar ist. Außerdem können weitere Informationen des Bremssteuergerätes hierzu mit aufgezeichnet werden.

Es ist bevorzugt, die ermittelten Verschleißwerte über einen vorbestimmbaren Zeitabschnitt, innerhalb dessen sie abrufbar sind, zu speichern. Dadurch ist die Rückverfolgung einerseits über einen bestimmten Zeitabschnitt möglich, und andererseits kann Speicherplatz eingespart werden, wenn gespeicherte Verschleißwerte nach dem abgelaufenen, vorbestimmbaren Zeitabschnitt wieder gelöscht werden können.

Beim Überprüfen der Unregelmäßigkeiten werden Absolutwerte und Gradienten der gespeicherten Verschleißwerte aus dem vorbestimmbaren Zeitabschnitt verwendet. Damit ist eine Plausibilisierung von erkannten Unregelmäßigkeiten einfach möglich.

In einer Ausführung wird das Untersuchen der gespeicherten Verschleißwerte durch Differenzbildung von zeitlich aufeinanderfolgenden Verschleißwerten durchgeführt. Es können außerdem Verschleißwerte von allen Radbremsen untereinander verglichen werden. Die Verschleißwerte von allen Radbremsen lassen sich auch achsweise oder/und seitenweise vergleichen. Diese Maßnahmen können einzeln oder in Kombination durchgeführt werden, wodurch sich eine hohe Genauigkeit beim Erkennen von Unregelmäßigkeiten erzielen lässt.

Beim Ausgeben von entsprechenden Informationen kann die Art der erkannten Unregelmäßigkeit und die betroffene Radbremse angegeben werden. Dies führt zu einer zielgerichteten und schnellen Wartung bzw. Reparatur und spart somit Suchzeiten ein. Besonders vorteilhaft dabei kann zusätzlich eine Rückverfolgung gespeicherter Betriebszustände des Bremssteuergerätes nach Art einer Black-Box sein.

Eine Erkennungsvorrichtung zur Durchführung eines Verfahrens zum Erkennen von Unregelmäßigkeiten einer Bremsanlage eines Fahrzeugs mit einem Bremssteuergerät und Radbremsen mit jeweiligen Verschleißsensoren, mit einer Steuereinrichtung umfasst: eine Signalverarbeitungseinrichtung zur Verarbeitung von Signalen der Verschleißsensoren zum Erhalt von Verschleißwerten; eine erste Speichereinrichtung zur Speicherung der Verschleißwerte; eine zweite Speichereinrichtung zur Speicherung von vorbestimmbaren Normalwerten und Grenzwerten; eine Vergleichseinrichtung zur Untersuchung und zum Vergleich der gespeicherten Verschleißwerte zur Erkennung von Unregelmäßigkeiten; und eine Überprüfungseinrichtung zur Überprüfung der erkannten Unregelmäßigkeiten und Ausgabe entsprechender Informationen.

Die Erkennungsvorrichtung ist für die Durchführung des oben beschriebenen Verfahrens vorgesehen. Sie kann als separates Gerät aufgebaut oder in ein Bremssteuergerät integriert sein, wodurch nur ein sehr geringer zusätzlicher Platzbedarf erforderlich ist. Es ist bevorzugt, dass die Erkennungsvorrichtung als Software in das Bremssteuergerät integriert ist, wobei die Signalverarbeitungseinrichtung, die Vergleichseinrichtung und die Überprüfungseinrichtung als Software ausgebildet sind, und die Speichereinrichtungen als bereits vorhandene Bestandteile eines Bremssteuergerätes benutzt werden können.

Die Erfindung wird nun anhand eines Ausführungsbeispiels mit Bezug auf die beigefügten Zeichnungen näher erläutert. Hierbei zeigt:
- Fig. 1: eine schematische Darstellung einer Bremsanlage eines Fahrzeugs mit einer erfindungsgemäßen Erkennungsvorrichtung;
- Fig. 2: ein Blockschaltbild eines Ausführungsbeispiels der erfindungsgemäßen Erkennungsvorrichtung nach Fig. 1; und
- Fig. 3: ein Flussdiagramm eines erfindungsgemäßen Verfahrens.

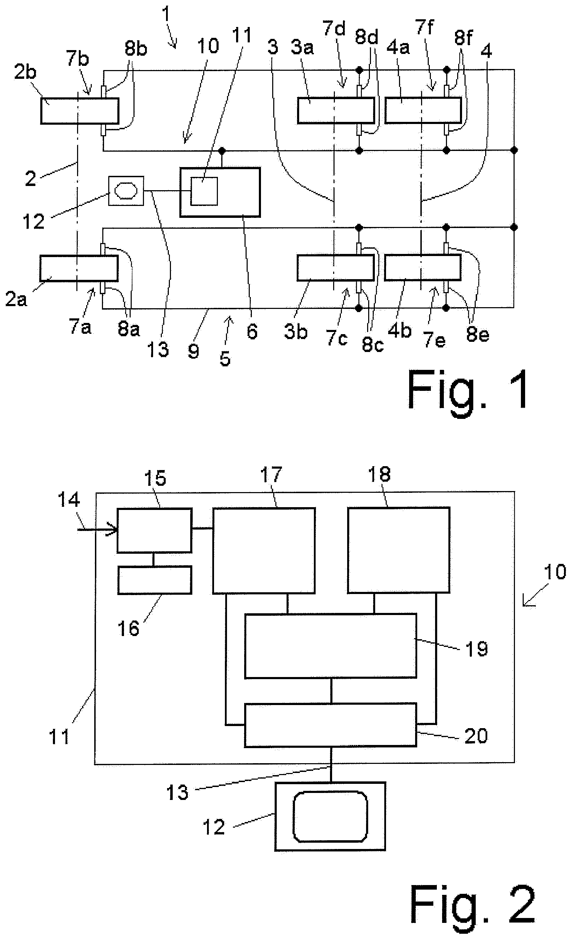

Fig. 1 zeigt eine schematische Darstellung einer Bremsanlage 5 eines Fahrzeugs 1 mit einer erfindungsgemäßen Erkennungsvorrichtung 10.

Das Fahrzeug 1 ist nicht dargestellt, es weist hier als ein Nutzfahrzeug eine Vorderachse 2, eine Mittelachse 3 und eine Hinterachse 4 auf. Die Vorderachse 2 ist mit einem linken Rad 2a und einem rechten Rad 2b versehen, die Mittelachse 3 weist ein linkes Rad 3a und ein rechtes Rad 3b auf, und die Hinterachse 4 ist ebenfalls mit einem linken Rad 4a und einem rechten Rad 4b bestückt. Alle Räder 2a, 2b, 3a, 3b, 4a und 4b sind jeweils mit einer nicht gezeigten Radbremse 7a, 7b, 7c, 7d, 7e und 7f versehen, die in diesem Beispiel als Scheibenbremsen ausgeführt sind. Diese Scheibenbremsen besitzen hier jeweils 2 Bremsbeläge (nicht gezeigt), in denen jeweils Verschleißsensoren 8 eingebracht sind. Diese sind wie folgt verteilt: Verschleißsensoren 8a an der Radbremse 7a vorne links, Verschleißsensoren 8b an der Radbremse 7b vorne rechts, Verschleißsensoren 8c an der Radbremse 7c Mitte links, Verschleißsensoren 8d an der Radbremse 7d Mitte rechts, Verschleißsensoren 8e an der Radbremse 7e hinten links, und Verschleißsensoren 8f an der Radbremse 7f hinten rechts.

Die Verschleißsensoren 8a...f erfassen kontinuierlich den jeweiligen Verschleiß der ihnen zugeordneten Radbremsen 7a...f. Dieser Verschleiß kann zum Beispiel ein Summenverschleiß der Bremsbeläge und Bremsscheibe der zugeordneten Radbremsen 7a...f sein. Die Verschleißsensoren 8a...f erzeugen ein elektrisches Signal mit einer Information, welche einen jeweiligen Verschleißwert xᵢ, yᵢ, zᵢ enthält. Weiterhin enthält dieses Signal auch eine Information über den Ort des jeweiligen Verschleißsensors 8a...f, um eine eindeutige Zuordnung des Verschleißwertes xᵢ, yᵢ, zᵢ zu der zugehörigen Radbremse 7a...f, der zugehörigen Achse 2, 3, 4 und dem zugehörigen Rad 2a, 2b, 3a, 3b, 4a, 4b vornehmen zu können. Die Verschleißsensoren 8a...f stehen über einen internen Fahrzeugbus 9 mit einem Bremssteuergerät 6 der Bremsanlage 5 in Verbindung und übermitteln diese Signale zur Auswertung an das Bremssteuergerät 6. Das Bremssteuergerät 6 gibt dazu einerseits eine Information an den Fahrer über den momentanen Verschleißzustand aus, und nutzt diese Signale andererseits zu einer Verschleißharmonisierung zwischen den Achsen 2, 3, 4 durch entsprechende Änderung der Bremskraftverteilung.

Diese Signale der Verschleißsensoren 8a...f werden außerdem einer Steuereinrichtung 11 der Erkennungsvorrichtung 10 zugeleitet. Die Steuereinrichtung 11 untersucht diese Signale und kann so Unregelmäßigkeiten der Radbremsen 7a...f erkennen. Dies wird weiter unten noch näher erläutert. Im Falle von Unregelmäßigkeiten wird eine Information für den Fahrer, z.B. über einen Ausgang 13, an eine Ausgabeeinheit 12 geleitet. Diese Fahrerinformation kann darin bestehen, dass eine Störung der Radbremsen 7a...f angezeigt wird. Dabei kann auch der jeweilige Ort angegeben oder/und auf der Ausgabeeinheit 12 visualisiert werden. Die erkannte(n) Unregelmäßigkeit(en) kann/können auch in einem Speicher abgelegt werden, der bei einer Wartung/Reparatur auslesbar ist.

Anhand von Fig. 2, welche ein Blockschaltbild eines Ausführungsbeispiels der erfindungsgemäßen Erkennungsvorrichtung 10 nach Fig. 1 darstellt, wird die Funktion der Erkennungsvorrichtung 10 erläutert.

Die Erkennungsvorrichtung 10 weist die Steuereinrichtung 11 auf, welche eine Signalverarbeitungseinrichtung 15, einen Zeitgeber 16, eine erste Speichereinrichtung 17, eine zweite Speichereinrichtung 18, eine Vergleichseinrichtung 19 und eine Überprüfungseinrichtung 20 umfasst.

Die Signale der Verschleißsensoren 8a...f mit den darin enthaltenen Verschleißwerten xᵢ, yᵢ, zᵢ werden direkt von dem Fahrzeugbus 9 oder/und in ausgewerteter oder bearbeiteter Form von dem Bremssteuergerät 6 über einen Signaleingang 14 in die Signalverarbeitungseinrichtung 15 geleitet. Die Signalverarbeitungseinrichtung 15 verarbeitet die empfangenen Signale derart, dass die darin enthaltenen Informationen der Verschleißwerte xᵢ, yᵢ, zᵢ extrahiert werden (falls sie das noch nicht sind) und in einem passenden Format in einfacher Weise speicherbar werden. Sie kann zum Beispiel auch analoge Signale in digitale umwandeln. Die Signalverarbeitungseinrichtung 15 bearbeitet jedes ankommende Signal außerdem derart, dass der jeweilige im Signal enthaltene Verschleißwert xᵢ, yᵢ, zᵢ mit einer Zeitinformation tᵢ aus dem Zeitgeber 16, der an die Signalverarbeitungseinrichtung 15 angeschlossen ist, verknüpft wird. Diese Zeitinformation tᵢ kann z.B. Uhrzeit und Datum beinhalten. Außerdem prüft die Signalverarbeitungseinrichtung 15, ob jeder so empfangene Verschleißwert xᵢ, yᵢ, zᵢ eine Information über den Ausgangsort aufweist, damit er eindeutig zugeordnet werden kann. Die Signalverarbeitungseinrichtung 15 überträgt dann jeden so geprüften und mit einer Zeitinformation tᵢ versehenen Verschleißwert xᵢ, yᵢ, zᵢ an die erste Speichereinrichtung 17, welche an die Signalverarbeitungseinrichtung 15 angeschlossen ist. Jeder Verschleißwert xᵢ, yᵢ, zᵢ wird dann in der ersten Speichereinrichtung 17 gespeichert.

Eine Speicherung dieser Verschleißwerte xᵢ, yᵢ, zᵢ kann z.B. wie in der folgenden Tabelle angegeben erfolgen:

**Tabelle 1: Speicherung von Verschleißwerten**

| Zeitinformation | Verschleißwerte xᵢ Vorderachse 2 | Verschleißwerte yᵢ Mittelachse 3 | Verschleißwerte zᵢ Hinterachse 4 |
|---|---|---|---|
| tᵢ | xᵢ(8a); xᵢ(8b) | yᵢ(8c); yᵢ(8d) | zᵢ(8e); zᵢ(8f) |
| tᵢ₊₁ | xᵢ₊₁(8a); xᵢ₊₁(8b) | yᵢ₊₁(8c); yᵢ₊₁(8d) | zᵢ₊₁(8e); zᵢ₊₁(8f) |
| ... | ... | ... | ... |
| tₙ | xₙ(8a); xₙ(8b) | yₙ(8c); yₙ(8d) | zₙ(8e); zₙ(8f) |

Die Speicherung der Verschleißwerte xᵢ, yᵢ, zᵢ erfolgt über einen vorbestimmbaren Zeitabschnitt. Dieser Zeitabschnitt kann zum Beispiel 50 Stunden betragen, aber auch länger oder kürzer sein. Das bedeutet, dass jeder gespeicherte Verschleißwert xᵢ, yᵢ, zᵢ erst nach diesem Zeitabschnitt gelöscht werden kann, um zum Beispiel freien Speicherplatz zu erhalten. Auf die gespeicherten Verschleißwerte xᵢ, yᵢ, zᵢ kann somit über den vorbestimmbaren Zeitabschnitt jederzeit zugegriffen werden.

Ein solches Zugreifen auf die gespeicherten Verschleißwerte erfolgt von der Vergleichseinrichtung 19, die mit der ersten Speichereinrichtung 17 und der zweiten Speichereinrichtung 18 verbunden ist. In der zweiten Speichereinrichtung 18 sind vorher ermittelte und/oder berechnete übliche, "normale" Werte für Verschleiß, sowie vorbestimmbare Grenzwerte gespeichert.

Die Vergleichseinrichtung 19 führt verschiedene Vergleiche und Auswertungen der in der ersten Speichereinrichtung 17 gespeicherten Verschleißwerte xᵢ, yᵢ, zᵢ durch. Dies kann für jede Radbremse 7a...f einzeln erfolgen, indem z.B. Differenzen aufeinanderfolgender Werte untereinander verglichen werden. Außerdem wird der Verschleiß für die Radbremsen 7a...b, 7c...d und 7e...f jeder Achse 2, 3, 4 untersucht. Weiterhin können die Verschleißwerte xᵢ, yᵢ, zᵢ für die rechten und linken Radbremsen untereinander verglichen werden. Schließlich ist auch ein Vergleich der Verschleißwerte xᵢ, yᵢ, zᵢ aller Radbremsen 7a...f untereinander möglich. Die Ergebnisse dieser Vergleiche, Untersuchungen und zusätzlichen statistischen Auswertungen, welche die Vergleichseinrichtung 19 auch ausführen kann, vergleicht sie mit den in der zweiten Speichereinrichtung 18 gespeicherten korrespondierenden Normalwerten und Grenzwerten. Sind aufgrund eines solchen Vergleichs Unregelmäßigkeiten feststellbar, dass sich die Verschleißwerte xᵢ, yᵢ, zᵢ einer Radbremse 7a...f im Hinblick auf andere Verschleißwerte xᵢ, yᵢ, zᵢ einer anderen Radbremse 7a...f (radweise und/oder achsweise) mehr oder weniger stark verändert haben, oder auch einen Trend bilden, könnte dies als Störung in der jeweiligen betroffenen Radbremse 7a...f ausgelegt werden. Zur Vermeidung von Fehlinformationen und zur Plausibilisierung wird dies Ergebnis der Überprüfungseinrichtung 20 zugeleitet, welche mit einem Ausgang der Vergleichseinrichtung 19 in Verbindung steht.

Die Überprüfungseinrichtung 20 überprüft mit Hilfe eines vorbestimmbaren Algorithmus die festgestellten Unregelmäßigkeit(en), indem sie z.B. die zugehörigen Absolutwerte sowie die Gradienten der in der ersten Speichereinrichtung 17 gespeicherten Verschleißwerte xᵢ, yᵢ, zᵢ über mehrere zurückliegende Betriebsstunden innerhalb des vorbestimmbaren Zeitabschnitts prüft. Dazu ist die Überprüfungseinrichtung 20 sowohl mit der ersten Speichereinrichtung 17 als auch mit der zweiten Speichereinrichtung 18 verbunden.

Wenn die Überprüfungseinrichtung 20 eine solche Unregelmäßigkeit, die zum Beispiel ein Verschleißwert von mehr als 0,4 mm innerhalb einer Betriebszeit von weniger als beispielsweise 50 Stunden, überprüft und als richtig befunden hat, gibt sie eine entsprechende Information über den Ausgang 13 an die Ausgabeeinheit 12 aus. Die Ausgabeeinheit 12 kann z.B. ein Bildschirm eines Fahrerinformationssystems sein. Auch Warnlampen mit entsprechender Symbolik sind möglich.

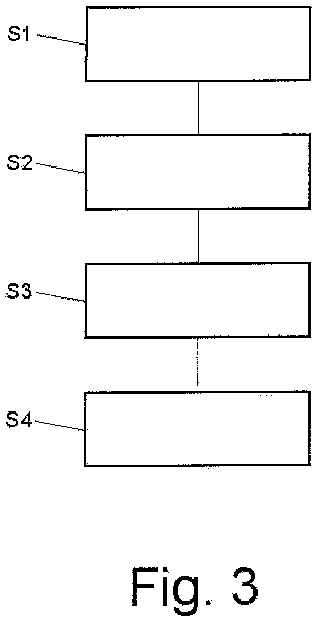

Ein Flussdiagramm eines erfindungsgemäßen Verfahrens zum Erkennen dieser Unregelmäßigkeiten ist in Fig. 3 gezeigt.

In einem ersten Verfahrensschritt S1 werden die Verschleißwerte in der ersten Speichereinrichtung 17 gespeichert, nachdem sie durch die Signalverarbeitungseinrichtung 15 bearbeitet worden sind. Die Speicherung erfolgt über einen vorbestimmbaren Zeitabschnitt, innerhalb dessen die gespeicherten Verschleißwerte xᵢ, yᵢ, zᵢ abrufbar sind.

In einem zweiten Verfahrensschritt S2 werden die gespeicherten Verschleißwerte xᵢ, yᵢ, zᵢ auf unterschiedliche Weise durch die Vergleichseinrichtung 19 untersucht.

Die Untersuchungsergebnisse des zweiten Verfahrensschritts S3 werden dann in einem dritten Verfahrensschritt S3 mit in der zweiten Speichereinrichtung 18 gespeicherten vorbestimmbaren Normal- und/oder Grenzwerten verglichen.

Stellt sich bei dem Vergleich im dritten Verfahrensschritt S3 eine Unregelmäßigkeit heraus, wird diese in einem vierten Verfahrensschritt S4 durch die Überprüfungseinrichtung 20 geprüft. Ist das Prüfergebnis positiv, so gibt die Überprüfungseinrichtung 20 eine Information aus, dass eine Unregelmäßigkeit an einer Radbremse 7a...f vorliegt. Die Art der Unregelmäßigkeit und die betroffene Radbremse 7a...f werden benannt und angezeigt.

So kann eine solche Unregelmäßigkeit mit höherem Verschleiß je nach Randbedingungen verschiedene Ursachen haben, wie z.B. ein Heißläufer der betroffenen Radbremse 7a...f, ein unzulässig hoher Belagverschleiß durch z.B. abgelöste Belagmasse. Es kann auch ein großes Restschleifmoment vorherrschen, welches eine verklemmte oder schwergängige Bremsmechanik oder einen schwergängigen Bremsbelag als Ursache haben kann. Mittels der erfindungsgemäßen Erkennungsvorrichtung 10 sind Unregelmäßigkeiten schon früh in der Entstehungsphase erkennbar und können durch entsprechende Maßnahmen (Wartung, Reparatur) entsprechend schnell behoben werden.

Die Erkennungseinrichtung 10 ist vorzugsweise so aufgebaut, dass die Steuereinrichtung 11 mit der Signalverarbeitungseinrichtung 15, dem Zeitgeber 16, der Vergleichseinrichtung 19 und der Überprüfungseinrichtung 20 als Software erstellt sind und in das Bremssteuergerät 6 integriert sind, d.h. ein Bestandteil der Software des Bremssteuergerätes 6 sind. Dabei können die erste Speichereinrichtung 17 und die zweite Speichereinrichtung 18 Bestandteile von schon vorhandenen Speichereinrichtungen des Bremssteuergerätes 6 sein. Selbstverständlich können die erste Speichereinrichtung 17 und die zweite Speichereinrichtung 18 auch als zusätzliche Bauteile, z.B. Speicherchips, in noch freie Steckplätze (falls vorhanden) des Bremssteuergerätes 6 eingesetzt werden.

Die Erfindung ist nicht auf die oben beschriebenen Ausführungsbeispiele beschränkt. Sie ist selbstverständlich im Rahmen der beigefügten Ansprüche modifizierbar.

So ist es denkbar, dass zusätzlich zu den Verschleißsensoren 8a...f auch Temperatursensoren für jede Radbremse 7a ... f angeordnet sind, durch welche bei Bremsvorgängen auftretende Temperaturen zusätzlich zu den Verschleißdaten aufgezeichnet werden können, wodurch sich eine höhere Genauigkeit der Erkennung von Unregelmäßigkeiten ergibt.

Die Überprüfungseinrichtung 20 kann auch Bestandteil der Vergleichseinrichtung 19 sein.

Die Erkennungsvorrichtung 10 kann auch als ein separates Gerät, z.B. als Nachrüstbauteil, ausgebildet sein.

### Bezugszeichenliste

- 1: Fahrzeug
- 2: Vorderachse
- 2a: Rad vorne links
- 3b: Rad vorne rechts
- 3: Mittelachse
- 3a: Rad Mitte links
- 3b: Rad Mitte rechts
- 4: Hinterachse
- 4a: Rad hinten links
- 4b: Rad hinten rechts
- 5: Bremsanlage
- 6: Bremssteuergerät
- 7a: Radbremse vorne links
- 7b: Radbremse vorne rechts
- 7c: Radbremse Mitte links
- 7d: Radbremse Mitte rechts
- 7e: Radbremse hinten links
- 7f: Radbremse hinten rechts
- 8a: Verschleißsensor vorne links
- 8b: Verschleißsensor vorne rechts
- 8c: Verschleißsensor Mitte links
- 8d: Verschleißsensor Mitte rechts
- 8e: Verschleißsensor hinten links
- 8f: Verschleißsensor hinten rechts
- 9: Fahrzeugbus
- 10: Erkennungsvorrichtung
- 11: Steuereinrichtung
- 12: Ausgabeeinheit
- 13: Ausgang
- 14: Signaleingang
- 15: Signalverarbeitungseinrichtung
- 16: Zeitgeber
- 17: Erste Speichereinrichtung
- 18: Zweite Speichereinrichtung
- 19: Vergleichseinrichtung
- 20: Überprüfungseinrichtung
- S1...4: Verfahrensschritte
- tᵢ: Zeitinformation
- xᵢ, yᵢ, zᵢ: Verschleißwerte

## Patentansprüche

1. Verfahren zum Erkennen von Unregelmäßigkeiten einer Bremsanlage (5) eines Fahrzeugs (1) mit einem Bremssteuergerät (6) und Radbremsen (7a...f) mit jeweiligen Verschleißsensoren (8a...f), mit folgenden Verfahrensschritten:
S1 Ermitteln von Verschleißwerten (xᵢ, yᵢ, zᵢ) der Radbremsen (7a...f) durch die jeweiligen Verschleißsensoren (8a...f) und Speichern der Verschleißwerte (xᵢ, yᵢ, zᵢ);
S2 Untersuchen der gespeicherten Verschleißwerte (xᵢ, yᵢ, zᵢ);
S3 Vergleichen von Ergebnissen des Untersuchens der gespeicherten Verschleißwerte (xᵢ, yᵢ, zᵢ) mit vorbestimmbaren Normalwerten und/oder Grenzwerten; und
S4 Erkennen von Unregelmäßigkeiten anhand des Vergleichens, Überprüfen der Unregelmäßigkeiten und Ausgeben von entsprechenden Informationen,
**dadurch gekennzeichnet, dass** den ermittelten Verschleißwerte (xᵢ, yᵢ, zᵢ) vor dem Speichern eine Zeitinformation (tᵢ) zugefügt wird.

2. Verfahren nach Anspruch 1, **dadurch gekennzeichnet, dass** die ermittelten Verschleißwerte (xᵢ, yᵢ, zᵢ) über einen vorbestimmbaren Zeitabschnitt, innerhalb dessen sie abrufbar sind, gespeichert werden.

3. Verfahren nach Anspruch 2, **dadurch gekennzeichnet, dass** beim Überprüfen der Unregelmäßigkeiten Absolutwerte und Gradienten der gespeicherten Verschleißwerte (xᵢ, yᵢ, zᵢ) aus dem vorbestimmbaren Zeitabschnitt verwendet werden.

4. Verfahren nach einem der vorhergehenden Ansprüche, **dadurch gekennzeichnet, dass** das Untersuchen der gespeicherten Verschleißwerte (xᵢ, yᵢ, zᵢ) durch Differenzbildung von zeitlich aufeinanderfolgenden Verschleißwerten (xᵢ, yᵢ, zᵢ) durchgeführt wird.

5. Verfahren nach einem der vorhergehenden Ansprüche, **dadurch gekennzeichnet, dass** beim Untersuchen der gespeicherten Verschleißwerte (xᵢ, yᵢ, zᵢ) Verschleißwerte (xᵢ, yᵢ, zᵢ) von allen Radbremsen (7a...f) untereinander verglichen werden.

6. Verfahren nach einem der vorhergehenden Ansprüche, **dadurch gekennzeichnet, dass** beim Untersuchen der gespeicherten Verschleißwerte (xᵢ, yᵢ, zᵢ) Verschleißwerte (xᵢ, yᵢ, zᵢ) von allen Radbremsen (7a...f) achsweise oder/und seitenweise verglichen werden.

7. Verfahren nach einem der vorhergehenden Ansprüche, **dadurch gekennzeichnet, dass** beim Ausgeben von entsprechenden Informationen die Art der erkannten Unregelmäßigkeit und die betroffene Radbremse (7a...f) angegeben wird.

8. Erkennungsvorrichtung (10) zur Durchführung des Verfahrens nach einem der vorhergehenden Ansprüche, mit einer Steuereinrichtung (11), umfassend:
eine Signalverarbeitungseinrichtung (15) zur Verarbeitung von Signalen der Verschleißsensoren (8a...f) zum Erhalt von Verschleißwerten (xᵢ, yᵢ, zᵢ);
eine erste Speichereinrichtung (17) zur Speicherung der Verschleißwerte (xᵢ, yᵢ, zᵢ);
eine zweite Speichereinrichtung (18) zur Speicherung von vorbestimmbaren Normalwerten und Grenzwerten;
eine Vergleichseinrichtung (19) zur Untersuchung und zum Vergleich der gespeicherten Verschleißwerte (xᵢ, yᵢ, zᵢ) zur Erkennung von Unregelmäßigkeiten; und
eine Überprüfungseinrichtung (20) zur Überprüfung der erkannten Unregelmäßigkeiten und Ausgabe entsprechender Informationen,
**dadurch gekennzeichnet, dass** die Steuereinrichtung (11) einen Zeitgeber (16) aufweist, dessen Ausgangssignale zur Verknüpfung mit den zu speichernden Verschleißwerten (xᵢ, yᵢ, zᵢ) vorgesehen sind.

9. Erkennungsvorrichtung (10) nach Anspruch 8, **dadurch gekennzeichnet, dass** sie weiterhin eine Ausgabeeinheit (12) aufweist.

## Claims

1. Method for detecting irregularities of a brake assembly (5) of a vehicle (1), having a brake control device (6) and wheel brakes (7a ....f), having respective wear sensors (8a...f), having the following method steps:
S1 determine wear values (xᵢ, yᵢ, zᵢ) of the wheel brakes (7a...f) through the respective wear sensors (8a...f) and store the wear values (xᵢ, yᵢ, zᵢ);
S2 examine the stored wear values (xᵢ, yᵢ, zᵢ);
S3 compare results of the examination of the stored wear values (xᵢ, yᵢ, zᵢ) with predefinable normal values and / or limits; and
S4 detect irregularities on the basis of the comparison, check the irregularities and output corresponding information,
**characterised in that** time information (tᵢ) is added to the determined wear values (xᵢ, yᵢ, zᵢ) prior to storage.

2. Method according to claim 1, **characterised in that** the determined wear values (xᵢ, yᵢ, zᵢ) are stored over a predefinable time portion, within which they can be retrieved.

3. Method according to claim 2, **characterised in that**, when checking the irregularities, absolute values and gradients of the stored wear values (xᵢ, yᵢ, zᵢ) from the predefinable time portion are used.

4. Method according to one of the preceding claims, **characterised in that** the examination of the stored wear values (xᵢ, yᵢ, zᵢ) is carried out by means of the differences between wear values (xᵢ, yᵢ, zᵢ) following each other over time.

5. Method according to one of the preceding claims, **characterised in that**, when examining the stored wear values (xᵢ, yᵢ, zᵢ), wear values (xᵢ, yᵢ, zᵢ) of all wheel brakes (7a...f) are compared with each other.

6. Method according to one of the preceding claims, **characterised in that**, when examining the stored wear values (xᵢ, yᵢ, zᵢ), wear values (xᵢ, yᵢ, zᵢ) of all wheel brakes (7a...f) are compared both on an axle basis and / or side basis.

7. Method according to one of the preceding claims, **characterised in that**, when outputting corresponding information, the type of detected irregularity and the affected wheel brake (7a...f) are indicated.

8. Detection device (10) for carrying out the method according to one of the preceding claims, having a control unit (11), comprising:
a signal processing unit (15) for processing signals of the wear sensors (8a...f) to obtain wear values (xᵢ, yᵢ, zᵢ);
a first storage means (17) for storing the wear values (xᵢ, yᵢ, zᵢ);
a second storage means (18) for storing predefinable normal values and limits;
a comparison means (19) to examine and compare the stored wear values (xᵢ, yᵢ, zᵢ) for the detection of irregularities;
and
a checking means (20) to check the detected irregularities and output corresponding information,
**characterised in that** the control unit (11) has a time sensor (16), of which the output signals are provided to be associated with the wear values (xᵢ, yᵢ, zᵢ) to be stored.

9. Detection device (10) according to claim 8, **characterised in that** it further has an output unit (12).

## Revendications

1. Procédé de détection d'irrégularités d'un système (5) de freinage d'un véhicule (1), comprenant un appareil (6) de commande de frein et des freins (7a...f) de roue ayant des capteurs (8a...f) d'usure respectifs, comprenant les stades de procédé suivants :
S1 détermination de valeurs (xᵢ, yᵢ, zᵢ) d'usure des freins (7a...f) de roue par les capteurs (8a...f) respectifs et mémorisation des valeurs (xᵢ, yᵢ, zᵢ) d'usure ;
S2 analyse des valeurs (xᵢ, yᵢ, zᵢ) d'usure mémorisées ;
S3 comparaison de résultat de l'analyse des valeurs (xᵢ, yᵢ, zᵢ) d'usure mémorisées à des valeurs ,normales pouvant être déterminées à l'avance et/ou à des valeurs limites et
S4 détection d'irrégularités à l'aide de la comparaison, contrôle des irrégularités et émission d'informations correspondantes,
**caractérisé en ce que** l'on ajoute, aux valeurs (xᵢ, yᵢ, zᵢ) d'usure déterminées, avant la mémorisation, une information (tᵢ) de temps.

2. Procédé suivant la revendication 1, **caractérisé en ce que** l'on mémorise les valeurs (xᵢ, yᵢ, zᵢ) d'usure déterminées pendant un laps de temps pouvant être déterminé à l'avance pendant lequel elles peuvent être appelées.

3. Procédé suivant la revendication 2, **caractérisé en ce que**, dans le contrôle des irrégularités, on utilise des valeurs absolues et des gradients des valeurs (xᵢ, yᵢ, zᵢ) d'usure mémorisées provenant du laps de temps pouvant être déterminé à l'avance.

4. Procédé suivant l'une des revendications précédentes, **caractérisé en ce que** l'on effectue l'étude des valeurs (xᵢ, yᵢ, zᵢ) d'usure mémorisées par formation de différences de valeurs (xᵢ, yᵢ, zᵢ) d'usure se succédant dans le temps.

5. Procédé suivant l'une des revendications précédentes, **caractérisé en ce que**, dans l'étude des valeurs (xᵢ, yᵢ, zᵢ) d'usure mémorisées, on compare entre elles des valeurs (xᵢ, yᵢ, zᵢ) d'usure de tous les freins (7a...f) de roue.

6. Procédé suivant l'une des revendications précédentes, **caractérisé en ce que**, dans l'analyse des valeurs (xᵢ, yᵢ, zᵢ) d'usure mémorisées, on compare, essieu par essieu ou/et côté par côté, des valeurs (xᵢ, yᵢ, zᵢ) d'usure de tous les freins (7a...f) de roue.

7. Procédé suivant l'une des revendications précédentes, **caractérisé en ce que**, lors de l'émission d'informations correspondantes, on indique le type de l'irrégularité détectée et le frein (7a...f) de roue concerné.

8. Système (10) de détection pour effectuer le procédé suivant l'une des revendications précédentes, ayant un dispositif (11) de commande, comprenant :
un dispositif (15) de traitement du signal pour traiter des signaux des capteurs (8a...f) d'usure afin d'obtenir des valeurs (xᵢ, yᵢ, zᵢ) d'usure ;
un premier dispositif (17) de mémorisation pour mémoriser des valeurs (xᵢ, yᵢ, zᵢ) d'usure ;
un deuxième dispositif (18) de mémorisation pour mémoriser des valeurs normales pouvant être déterminées à l'avance et des valeurs limites ;
un dispositif (19) de comparaison pour l'étude et la comparaison des valeurs (xᵢ, yᵢ, zᵢ) d'usure mémorisées afin de détecter des irrégularités et
un dispositif (20) de contrôle pour contrôler les irrégularités détectées et pour émettre des informations correspondantes,
**caractérisé en ce que** le dispositif (11) de commande a un indicateur (16) de temps, dont les signaux de sortie sont prévus pour se combiner aux valeurs (xᵢ, yᵢ, zᵢ) d'usure à mémoriser.

9. Système (10) de détection suivant la revendication 8, **caractérisé en ce qu'**il a en outre une unité (12) d'émission.
